# EUROPÄISCHE PATENTSCHRIFT

(11) **EP 3 977 216 B1**
(45) Veröffentlichungstag und Bekanntmachung des Hinweises auf die Patenterteilung: **28.12.2022**
(21) Anmeldenummer: 20714883.4
(22) Anmeldetag: 11.03.2020
(51) Int. Cl.: G05B 19/18, F16H 55/08

(54) **HERSTELLUNGSVERFAHREN FÜR EINE VERZAHNUNG, WERKZEUG UND MASCHINENKOMPONENTE**
PRODUCTION METHOD FOR A COG, TOOL AND MACHINE COMPONENT
PROCÉDÉ DE FABRICATION D'UNE DENTURE, OUTIL ET COMPOSANT DE MACHINE

(30) Priorität: 28.05.2019 EP 19176917
(43) Veröffentlichungstag der Anmeldung: 06.04.2022
(73) Patentinhaber: Flender GmbH, 46395 Bocholt (DE)
(72) Erfinder: HESS, Ralf, 46395 Bocholt (DE)
(74) Vertreter: Michalski Hüttermann & Partner Patentanwälte mbB
(86) Internationale Anmeldenummer: PCT/EP2020/056482
(87) Internationale Veröffentlichungsnummer: WO 2020/239281

(56) Entgegenhaltungen:
- DE-B3-102006 015 521
- DE-B3-102008 045 318
- DE-B3-102013 004 861
- US-A1- 2014 366 668

## Beschreibung

Die Erfindung betrifft ein Verfahren zum Herstellen einer Verzahnung und ein Computerprogrammprodukt, das zur Durchführung dieses Verfahrens ausgebildet ist. Die Erfindung betrifft auch ein Werkzeug, das basierend auf dem erfindungsgemäßen Verfahren ausgebildet ist. Gleichermaßen betrifft die Erfindung eine Maschinenkomponente, die mit einer erfindungsgemäßen Verzahnung ausgestattet ist.

Aus DE 10 2006 015 521 B3 ist eine Verzahnungsgeometrie bekannt, die eine Zahnflanke aufweist, die oberhalb eines Zahnfußbereichs eine Evolventenform aufweist. Der Abschnitt mit der Evolventenform geht in Richtung eines anschließenden Zahnfußbereichs in eine Ellipsenform über. Die Ellipsenform ist dabei als Ellipsenabschhnitt ausgebildet, deren lange Halbachse bezüglich einer Radialen, in einer Normalschnittebene betrachtet, geneigt ist.

Die Druckschrift DE 10 2013 004 861 B3 offenbart eine Verzahnung eines Zahnrads, das eine Zahnflanke aufweist, die einen evolventisch geformten Abschnitt aufweist. In Richtung eines Zahnfußes geht der evolventisch geformte Abschnitt in eine Bezierkurve über.

Aus DE 10 2008 045 318 B3 ist ein Verfahren mit den Merkmalen des Oberbegriffs des Anspruchs 1 bekannt.

Verzahnungen werden in einer Vielzahl an Maschinenkomponenten und Maschinen eingesetzt. In zahlreichen Anwendungen besteht Bedarf an Verzahnungen, die eine hohe mechanische Beanspruchbarkeit und hohe Zuverlässigkeit bieten, jedoch gleichzeitig einfach und wirtschaftlich herstellbar sind. Der Erfindung liegt die Aufgabe zugrunde, eine Verzahnung bereitzustellen, die in zumindest einem der skizzierten Aspekte eine Verbesserung bietet.

Die Aufgabenstellung wird durch das erfindungsgemäße Verfahren zum Herstellen einer Verzahnung gelöst. Die herzustellende Verzahnung umfasst eine Mehrzahl an Zähnen und ist an einem Verzahnungsrohteil auszubilden. In einem ersten Schritt erfolgt ein Auswählen einer Startkontur und einer benachbarten kopfseitigen Teilkontur des Zahns. Die kopfseitige Teilkontur beschreibt im Wesentlichen den Abschnitt einer Zahnflanke, auf der im Betrieb eine andere Verzahnung, beispielsweise ein Gegenrad, abrollt. An diese schließt sich die fußseitige Startkontur an, wobei zwischen der fußseitigen Startkontur und der kopfseitigen Teilkontur im ersten Schritt kein stetiger Übergang vorliegen muss. Die kopfseitige Teilkontur kann beispielsweise einer Basis-Verzahnung entnommen werden, die durch das erfindungsgemäße Verfahren zu verbessern ist oder kann durch eine Benutzervorgabe eingestellt werden. Die fußseitige Startkontur dient als Basis für das weitere Verfahren und kann beispielsweise einer zu verbessernden Basis-Verzahnung entnommen sein oder durch eine Benutzervorgabe eingestellt werden.

In einem zweiten Schritt erfolgt ein Auswählen eines Anpassungsbereichs für zumindest einen Teil der fußseitigen Startkontur. Der Anpassungsbereich stellt dabei einen wählbaren Abschnitt oder die gesamte fußseitige Startkontur dar, die durch das erfindungsgemäße Verfahren modifiziert wird. Der Anpassungsbereich ist dabei basierend auf einem Algorithmus, beispielsweise einem Knowledge-Based-Engineering-Algorithmus, oder einer Benutzervorgabe einstellbar. In einem dritten Schritt erfolgt ein Verändern der fußseitigen Startkontur anhand einer Korrekturvorgabe. Durch die Korrekturvorgabe wird ein Verlauf der fußseitigen Startkontur modifiziert, beispielsweise durch ein Aufdicken eines mit der fußseitigen Startkontur korrespondierenden Zahnfußbereichs, oder ein Zurücknehmen des korrespondierenden Zahnfußbereichs. Durch das Verändern der fußseitigen Startkontur wird diese zu einer fußseitigen Teilkontur bzw. fußseitigen Endkontur umgewandelt. Die Begriffe "fußseitige Endkontur" und "fußseitige Teilkontur" sind im Sinne der Anmeldung synonym aufzufassen. Erfindungsgemäß wird die Korrekturvorgabe anhand einer Korrekturfunktion ermittelt, die zumindest einen einstellbaren Funktionsparameter umfasst. Dabei ist der Funktionsparameter durch einen Algorithmus, beispielsweise einen Optimierungsalgorithmus, eine vorgegebene Tabelle, oder eine weitere Hilfsfunktion, oder eine Benutzervorgabe veränderbar. Dadurch ist ein verbesserter Zahnfußbereich des Zahns erzielbar, der insbesondere eine gesteigerte Zahnfußtragfähigkeit aufweist. Bei nicht-definierter Lastflanke ist eine um bis zu 15% gesteigerte Zahnfußtragfähigkeit erzielbar. Bei definierter Lastflank ist eine um bis zu 20% gesteigerte Zahnfußtragfähigkeit erzielbar. Die Steigerung ist dabei auf die Basis-Verzahnung bezogen, die als Ausgangspunkt für das Verfahren dienen kann. Erfindungsgemäß verbesserte Verzahnungen sind gegenüber bekannten Verzahnungen mit gleichbleibendem Aufwand herstellbar. Des Weiteren können durch die Einstellbarkeit der Korrekturfunktion zusätzliche Anforderungen an die Form der herzustellenden Verzahnung berücksichtigt werden. Beispielsweise kann die Form der herzustellenden Verzahnung, insbesondere der zu ermittelnden fußseitigen Endkontur bzw. fußseitigen Teilkontur, derart eingestellt werden, dass diese gegen eine zugrundeliegende Basis-Verzahnung austauschbar ist. Folglich erlaubt das erfindungsgemäße Verfahren es, bei im Wesentlichen gleichbleibendem Fertigungsaufwand in einer Maschine einzeln verzahnte Maschinenkomponenten gegen solche mit erfindungsgemäß verbesserter Verzahnung auszutauschen. Dies erlaubt es, entsprechende Maschinen bedarfsgerecht kosteneffizient zu modifizieren. Insbesondere kann das beschriebene Verfahren symmetrisch an beiden Zahnflanken eines Zahns durchgeführt werden.

Die fußseitige Endkontur bildet eine fußseitige Endkontur, bzw. Teilkontur, die mit der kopfseitigen Teilkontur kombinierbar ist. Basierend auf der kopfseitigen Startkontur und der ermittelten fußseitigen Endkontur wird im erfindungsgemäßen Verfahren eine spanabhebende Fertigung der Verzahnung durchgeführt. Die kopfseitige Teilkontur und die ermittelte fußseitige Endkontur bzw. fußseitige Teilkontur gehören zu geometrischen Daten des herzustellenden Zahns der Verzahnung. Mittels der geometrischen Daten ist beispielsweise ein Werkzeug herstellbar, das zu einer spanabhebenden Fertigung der Verzahnung ausgebildet ist.

Bei dem beanspruchten Verfahren ist die fußseitige Startkontur im Wesentlichen als Ellipsenabschnitt ausgebildet. Ellipsen stellen einfach beschreibbare und rechenbare Konturen dar, die auch einen stetigen Übergang zur kopfseitigen Teilkontur des Zahns und gleichzeitig einen stetigen Übergang zu einem Nachbarzahn bieten können. Alternativ oder ergänzend kann die kopfseitige Teilkontur als Evolvente ausgebildet sein. Eine Evolvente bietet bei einem Abrollen einer gegenüberliegenden Verzahnung ein hohes Maß an Tragfähigkeit und ist einfach mit hoher Präzision herstellbar. Ferner bietet die Kombination einer Evolvente als kopfseitige Teilkontur und einer Ellipse als fußseitige Startkontur die Möglichkeit, diese mit reduziertem Aufwand glatt zu verbinden, also einen stetigen Übergang bereitzustellen. Ferner sind sowohl eine Evolvente als auch eine Ellipse mathematisch einfach beschreibbar, so dass das beanspruchte Verfahren auch mit einfacher Hardware mit verhältnismäßig geringer Rechenleistung schnell ausführbar ist.

Darüber hinaus kann die Korrekturfunktion einen Zahnlückenmittelpunkt als Startpunkt oder als Endpunkt aufweisen. Das beanspruchte Verfahren ist somit im Wesentlichen überlappungsfrei für jeden Zahn der Verzahnung durchführbar. Durch die Wahl des entsprechenden Zahnlückenmittelpunkts kann dort in einfacher Weise eine im Wesentlichen stetige und tangentiale Kontur der Verzahnung gewählt werden. Der Zahnlückenmittelpunkt ist in einfacher Weise auch automatisch ermittelbar. Die Lage des Anpassungsbereichs ist damit selbsttätig durch einen Algorithmus zumindest teilweise festlegbar. Zur Durchführung des Verfahrens notwendige Benutzervorgaben sind so minimiert, was wiederum die Nutzung des Verfahrens vereinfacht. Insbesondere wird so für die Korrekturfunktion und deren Überlagerung mit der fußseitigen Startkontur eine Randbedingung der Korrekturfunktion definiert. Eine solche Randbedingung ist wiederum für die Festlegung der Korrekturfunktion einsetzbar. Dadurch wird die Festlegung der Korrekturfunktion, was auch ein Auswählen bzw. Festlegen von Funktionsparametern umfasst, vereinfacht. Folglich ist mit reduziertem Rechenaufwand eine vorteilhafte Korrekturfunktion ermittelbar.

Ferner kann beim beanspruchten Verfahren die Korrekturfunktion einen Übergangspunkt zwischen der fußseitigen Startkontur und der kopfseitigen Teilkontur aufweisen. Der Übergangspunkt kann dabei als Startpunkt oder Endpunkt der Korrekturfunktion ausgebildet sein. Dementsprechend liegt der Übergangspunkt an einem fußseitigen Ende der kopfseitigen Teilkontur. Dadurch wird eine Randbedingung festgelegt, die zur Festlegung der Korrekturfunktion einsetzbar ist. Eine solche Randbedingung wiederum bietet eine Vereinfachung bei der Festlegung der Korrekturfunktion, was auch das Auswählen und Festlegen von Funktionsparametern umfasst.

Zusätzlich ist bei dem beanspruchten Verfahren die Korrekturfunktion als Polynom ausgebildet, dessen Koeffizienten einstellbar sind und als Polynom zumindest dritter Ordnung ausgebildet ist. Die Koeffizienten sind beispielsweise durch einen Optimierungsalgorithmus, eine Tabelle, eine Hilfsfunktion, oder eine Benutzervorgabe einstellbar. Polynome sind in einfacher Weise anpassbar und algebraisch an Randbedingungen, wie beispielsweise eine vorgebbare Tangentenstetigkeit, anpassbar. Darüber hinaus existieren zur Anpassung von Polynomen schnelle und erprobte Optimierungsalgorithmen. Das beanspruchte Verfahren ist somit in einfacher Weise modifizierbar. Dabei kann es sich vorzugsweise um ein Polynom mindestens vierter Ordnung handeln. Weiter alternativ oder ergänzend kann auch ein unstetiger Übergang zwischen der fußseitigen Teilkontur und der kopfseitigen Teilkontur erzielt werden. Ein unstetiger Übergang kann beispielsweise als Kontur mit einem Knick ausgebildet sein.

Des Weiteren kann der dritte Schritt, in dem ein Verändern der fußseitigen Startkontur erfolgt, wiederholt durchgeführt werden. Das wiederholte Durchführen des dritten Schritts erfolgt dabei unter einem Verändern von zumindest einem Funktionsparameter. Dementsprechend kann schnell und einfach eine optimierte fußseitige Teilkontur ermittelt werden. Beispielsweise kann der dritte Schritt auf Basis eines selbstlernenden Algorithmus durchgeführt werden, oder auf Basis einer Wertetabelle für zumindest einen Funktionsparameter, die durch systematisches Ausprobieren im dritten Schritt abgearbeitet wird. Ferner kann der dritte Schritt des beanspruchten Verfahrens durchgeführt werden, bis ein vorgebbarer Zielparameter erreicht ist. Ein solcher Zielparameter kann beispielsweise eine angestrebte Zahnfußtragfähigkeit sein. Dementsprechend kann beim Erreichen des Zielparameters beispielsweise für die Zahnfußtragfähigkeit ein Maximum erzielt werden.

Darüber hinaus kann der dritte Schritt, in dem die Korrekturvorgabe ermittelt wird, anhand einer Boundary-Element-Method-Berechnung, also der sogenannten Randelementmethode oder kurz BEM-Berechnung, durchgeführt werden. Dabei wird lediglich die Oberfläche der Verzahnung im Bereich der kopfseitigen bzw. fußseitigen Startkontur, insbesondere im Anpassungsbereich, modelliert und so beispielsweise die dort vorliegende mechanische Spannungsverteilung ermittelt. Eine BEM-Berechnung berücksichtigt nur eine Oberfläche der Verzahnung, was den Rechenaufwand beispielsweise gegenüber einer Finite-Elemente-Methode, kurz FEM-Berechnung, erheblich reduziert. Unter der Oberfläche der Verzahnung ist in diesem Sinn eine Randkontur der Verzahnung zu verstehen. Die vorliegende Erfindung basiert unter anderem auf der überraschenden Erkenntnis, dass insbesondere die Kombination einer fußseitigen Startkontur, die eine Ellipsenform, Ellipsenabschnittform bzw. eine Ellipsenbogenform aufweist, mit einer BEM-Berechnung derart veränderbar ist, dass die erzielbare Zahnfußtragfähigkeit erheblich gesteigert wird.

Ferner kann die fußseitige Startkontur als zumindest abschnittsweise Approximation einer Basis-Verzahnung sein, die als Ausgangsverzahnung aufzufassen ist. Diese dient als Ausgangsbasis, also als eine Verzahnungsgeometrie, die durch das beanspruchte Verfahren zu verbessern ist. Approximationen von vorhandenen Verzahnungen sind in einfacher Weise erstellbar, sind jedoch mit Abweichungen behaftet. Häufig anwendbare Approximationen von Zahnfußbereichen sind Ellipsen bzw. Ellipsenbögen, die besonders einfach mathematisch abbildbar sind. Das beanspruchte Verfahren ist robust gegen die Abweichungen, die zwischen einer existierenden Verzahnung und einer entsprechenden Approximation auftreten können. Folglich ist das beanspruchte Verfahren robust gegen ungenaue Startwerte und ist mit geringem Aufwand in puncto Vorbereitung, also Modellierung einer Basis-Verzahnung, durchführbar. Die Startwerte können beispielsweise durch eine Benutzereingabe bereitgestellt werden. Infolgedessen ist das beanspruchte Verfahren dazu geeignet, kosteneffizient eine verbesserte Verzahnung bereitzustellen.

In einer weiteren Ausführungsform des beanspruchten Verfahrens kann die Korrekturfunktion mittels eines Algorithmus, einer Hilfsfunktion, einer vorgebbaren Tabelle oder einer Benutzervorgabe durchgeführt werden. Die Korrekturfunktion ist somit flexibel anpassbar, so dass das Verfahren beispielsweise mit künftigen verbesserten Algorithmen, Hilfsfunktionen oder ähnlichem verbessert werden kann. Ferner kann die Korrekturfunktion mittels einer Künstlichen Intelligenz, einem selbstlernenden Algorithmus im dritten Schritt verändert werden. Alternativ oder ergänzend kann die Korrekturfunktion auch basierend auf Daten aus einem Computerabbild einer Maschinenkomponente, einem sogenannten Digitalen Zwilling oder Digital Twin, verändert werden.

Die zugrundeliegende Aufgabenstellung wird auch durch ein erfindungsgemäßes Computerprogrammprodukt gelöst. Das Computerprogrammprodukt ist in ausführbarer Form in einem Entwicklerwerkzeug, beispielsweise einer Computer-Workstation, speicherbar ausgebildet. Das Computerprogrammprodukt kann dabei monolithisch ausgebildet sein und vollständig im Entwicklerwerkzeug ausgeführt werden. Alternativ kann das Computerprogrammprodukt auch modular ausgebildet sein, wobei einzelne Funktionen des Computerprogrammprodukts außerhalb des Entwicklerwerkzeugs ausführbar gespeichert sind und mit dem Entwicklerwerkzeug im Betrieb zumindest vorübergehend in kommunikativer Datenverbindung stehen. Die außerhalb des Entwicklerwerkzeugs ausgeführten Funktionen können beispielsweise in einer Computer-Cloud gespeichert werden. Ferner kann das Computerprogrammprodukt vollständig als Software ausgebildet sein oder zumindest teilweise auch festverdrahtet, beispielsweise als Anwendungsspezifische Integrierte Schaltung, kurz ASIC, ausgebildet sein. Das Computerprogrammprodukt ist zumindest dazu ausgebildet, Geometriedaten, die eine fußseitige Teilkontur bzw. fußseitige Endkontur eines Zahns in einer Verzahnung beschreibt, auszugeben. Ferner kann das Computerprogrammprodukt dazu ausgebildet sein, Geometriedaten einer fußseitigen Startkontur und/oder einer kopfseitigen Teilkontur eines Zahns in einer Verzahnung zu empfangen und zu verarbeiten. Erfindungsgemäß ist das Computerprogrammprodukt dazu ausgebildet, ein Verfahren gemäß einer der oben skizzierten Ausführungsformen durchzuführen.

Die beschriebene Aufgabenstellung wird auch durch ein erfindungsgemäßes Werkzeug gelöst. Das Werkzeug kann beispielweise als Wälzfräser, Formfräser oder als Schneidrad ausgebildet sein, mit dem bei einer Fertigung die eine Verzahnung durch spanabhebende Bearbeitung hergestellt wird. Das Werkzeug weist eine Schneide auf, die bei der Bearbeitung mit einem metallischen Werkstoff in Kontakt kommt und so die Verzahnung erzeugt. Die Schneide weist dabei eine Form auf, die zumindest mit einem Teil einer fußseitigen Teilkontur bzw. fußseitigen Endkontur korrespondiert, die durch ein Verfahren gemäß einer der oben dargestellten Ausführungsformen hergestellt ist. Die Bearbeitungskontur der Schneide ist dementsprechend aus der fußseitigen Teilkontur abgeleitet. Beispielsweise kann die Bearbeitungskontur eine Abwälzung zumindest der fußseitigen Teilkontur sein. Die fußseitige Teilkontur und/oder die kopfseitige Teilkontur gemäß dem beanspruchten Verfahren sind auf ein Werkzeug übertragbar, durch das eine gewünschte Form der Verzahnung herstellbar ist. Insbesondere sind nach dem beanspruchten Verfahren optimierte Verzahnungen unmittelbar herstellbar. Das erfindungsgemäße Werkzeug erlaubt es somit, in puncto Zahnfußtragfähigkeit verbesserte Verzahnungen bei im Wesentlichen gleichbleibendem Fertigungsaufwand bzw. Fertigungskosten herzustellen.

Ebenso wird die skizzierte Aufgabenstellung durch eine erfindungsgemäße Maschinenkomponente gelöst, die als außenverzahnte Komponente, beispielsweise als Stirnrad, oder als innenverzahnte Komponente, beispielsweise als Hohlrad, ausgebildet sein kann. Weiter alternativ kann die Maschinenkomponente auch als Zahnstange ausgebildet sein. Die Maschinenkomponente weist eine Verzahnung auf, die eine Mehrzahl an Zähnen umfasst. Zumindest einer der Zähne weist eine fußseitige Teilkontur auf, die in eine kopfseitige Teilkontur übergeht. Die fußseitige Endkontur ist erfindungsgemäß in zumindest einem Abschnitt als eine Überlagerung eines Ellipsenabschnitts mit einer Polynomkurve ausgebildet. Darunter ist, von einem Startpunkt zu einem Endpunkt der Polynomkurve gesehen, eine Addition der Funktionswerte der Polynomkurve mit den Funktionswerten einer Ellipsenfunktion zu verstehen. Diese Überlagerung kann beispielsweise durch eine Ausführungsform des beanspruchten Verfahrens definiert sein, die wiederum auf ein beanspruchtes Werkzeug übertragen, diese Überlagerung an der fußseitigen Teilkontur herstellt. Die Maschinenkomponente kann also basierende auf dem skizzierten Verfahren hergestellt werden. Eine fußseitige Teilkontur, die einer Überlagerung eines Ellipsenabschnitts und einer Polynomkurve entspricht, bietet ein erhöhtes Maß an Zahnfußtragfähigkeit und ist in einfacher Weise schnell und zuverlässig herstellbar.

Ferner kann die kopfseitige Teilkontur der Maschinenkomponente als Evolvente ausgebildet sein. Eine Evolvente bietet ein vorteilhaftes Abwälzverhalten und eine hohe Tragfähigkeit bei einer Verzahnung. Die oben beschriebenen Vorteile der beanspruchten Lösung werden so in einem erhöhten Maß verwirklicht. Des Weiteren kann die fußseitige Teilkontur stetig in die kopfseitige Teilkontur übergehen.

Die zugrundeliegende Aufgabenstellung wird auch durch ein Getriebe gelöst, das über eine Eingangswelle und eine Ausgangswelle verfügt, wobei durch das Getriebe eine Drehzahl und ein Drehmoment von der Eingangswelle zur Ausgangswelle hin verändert werden. Das Getriebe kann als Stirnradgetriebe, als Schneckengetriebe, als Kegelradgetriebe, als Hypoidgetriebe, als Planetengetriebe, oder als eine Kombination hieraus ausgebildet sein. Das Getriebe verfügt als Maschinenkomponenten über außenverzahnte Zahnräder, und/oder mindestens ein innenverzahntes Hohlrad und/oder eine Zahnstange. Erfindungsgemäß weist zumindest eine der genannten Maschinenkomponenten eine Verzahnung auf, die gemäß einem der oben skizzierten Verfahren hergestellt ist, also als eine der erfindungsgemäßen Maschinenkomponenten ausgebildet ist. Das Getriebe kann als Getriebe für Windkraftanlagen, für Industrieanwendungen, für Schiffsantriebe, für Schienenfahrzeuge oder für Landfahrzeuge, also nicht-schienengebundene Fahrzeuge, ausgebildet sein.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleichen technischen Bedeutungen haben. Es zeigen im Einzelnen:
- FIG 1: eine schematische Detailansicht einer ersten Ausführungsform des beanspruchten Verfahrens und einer beanspruchten Maschinenkomponente;
- FIG 2: ein Ablaufdiagramm einer zweiten Ausführungsform des beanspruchten Verfahrens;
- FIG 3: eine schematische Ansicht einer Ausführungsform des beanspruchten Werkzeugs;
- FIG 4-7: eine schematische Ansicht mehrerer Ausführungsformen von beanspruchten Maschinenkomponenten;
- FIG 8: einen schematischen Aufbau einer Ausführungsform des beanspruchten Getriebes.

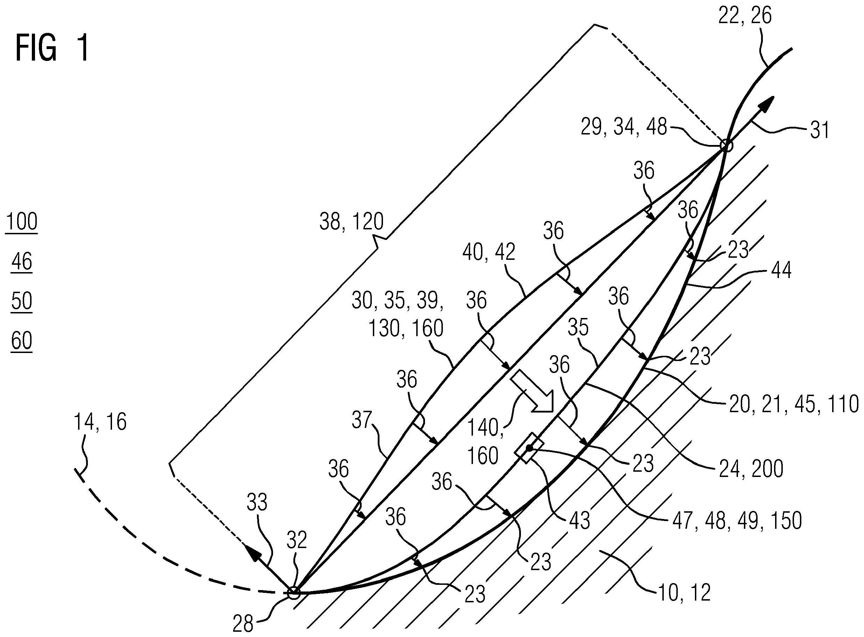

FIG 1 zeigt schematisch eine Detailansicht eines beanspruchten Verfahrens 100, durch das eine Verzahnung 10 an einer Maschinenkomponente 60 hergestellt wird. FIG 1 ist als Normalschnitt dargestellt. Das Verfahren 100 wird exemplarisch an einem Zahn 12 dargestellt, der zur herzustellenden Verzahnung 10 gehört. Das Verfahren 100 geht von einer Basis-Verzahnung 44 aus, die eine Verzahnung einer bereits existenten Maschinenkomponente ist, die mittels des Verfahrens 100 verbessert wird. Die Basis-Verzahnung 44 ist in einem ersten Schritt 110 durch eine fußseitige Startkontur 20, die als Ellipsenabschnitt 21 ausgebildet ist, approximiert. Die Approximation 45 durch den Ellipsenabschnitt 21 stellt für die Zwecke des Verfahrens 100 eine einfache, jedoch hinreichend exakte Grundlage dar. Die fußseitige Startkontur 20 erstreckt sich zwischen einem Zahnlückenmittelpunkt 28 und geht in einem Übergangspunkt 29 in eine kopfseitige Teilkontur 22 über, wobei der Übergangspunkt 29 im Wesentlichen als Sattelpunkt ausgebildet ist und so einen stetigen Übergang zwischen der kopfseitigen Teilkontur 22 und der fußseitigen Startkontur 20 erlaubt. An den Zahnlückenmittelpunkt 28 schließt sich in eine Richtung ein Nachbarzahn 14 mit seiner Zahnrückseite 16 an. Die kopfseitige Teilkontur 22 des Zahns 12 ist als Evolvente 26 ausgebildet. Mit Vorliegen der kopfseitigen Teilkontur 22 und der fußseitigen Startkontur 20 ist der erste Schritt 110 abgeschlossen.

In einem zweiten Schritt 120 wird ein Anpassungsbereich 38 ausgewählt, in dem die fußseitige Startkontur 20 zu verändern, also zu optimieren, ist. Der Anpassungsbereich 38 erstreckt sich zwischen dem Zahnlückenmittelpunkt 28 und dem Übergangspunkt 29 zur kopfseitigen Teilkontur 22. Der Anpassungsbereich 38 wird somit durch einen Startpunkt 32 und einen Endpunkt 34 begrenzt, deren Lage im zweiten Schritt 120 mittels einer Benutzervorgabe oder eines Algorithmus, wie beispielsweise einem Knowledge-Bases-Engineering-Algorithmus, einstellbar, also auswählbar ist.

Zwischen dem Startpunkt 32 und dem Endpunkt 34 liegt eine Erstreckungsachse 31 und senkrecht dazu eine Werteachse 33, auf die eine Korrekturfunktion 30 definiert ist, die für einen dritten Schritt 130 des Verfahrens 100 aufzustellen ist. Die Korrekturfunktion 30 ist als Graph 37 eines Polynoms 40, also als Polynomfunktion, ausgebildet. Durch eine Mehrzahl an Funktionswerten 36 der Korrekturfunktion 30 wird eine Korrekturvorgabe 35 im dritten Schritt 130 definiert, die auf die fußseitige Startkontur 20 anzuwenden ist. Da die Korrekturfunktion 30 im Wesentlichen ein Polynom 40 ist, ist sie durch eine Mehrzahl an Funktionsparametern 39, einstellbar. Bei einem Polynom 40 wie in FIG 1 sind diese Funktionsparameter 39 Koeffizienten 42. Die Korrekturfunktion 30 weist am Startpunkt 32 und am Endpunkt 34 als Funktionswert 36 Null auf. Infolgedessen verbleibt eine mittels des Verfahrens 100 zu bestimmende fußseitige Teilkontur 24 im Übergangspunkt 29 und im Zahnlückenmittelpunkt 28. Hierdurch werden an diesen Stellen Unstetigkeiten verhindert.

In einem vierten Schritt 140 wird die Korrekturvorgabe 35 auf die fußseitige Startkontur 20 angewandt. Dazu wird die fußseitige Startkontur 20 als eine Funktion im Koordinatensystem der Erstreckungsachse 31 und der Werteachse 33 aufgefasst und mit der Korrekturvorgabe 35 überlagert. Dazu werden die Funktionswerte 36 der Korrekturvorgabe 35 und korrespondierende Punkte 23 der fußseitigen Startkontur 20 entlang der Werteachse 33 addiert. Durch dieses Überlagern wird die fußseitige Teilkontur 24 gebildet. Beim Bilden der fußseitigen Teilkontur 24 werden Zielparameter 48 berücksichtigt. Einer der Zielparameter 48 nach FIG 1 ist ein stetiger Übergang zwischen der fußseitigen Teilkontur 24 und der kopfseitigen Teilkontur 22. Ein weiterer Zielparameter 48 gemäß FIG 1 besteht in einer vorgebbaren Zahnfußtragfähigkeit 47. Die Zahnfußtragfähigkeit 47 an der ermittelten fußseitigen Teilkontur 24 ist beispielsweise mittels einer Boundary-Element-Method-Berechnung 49 ermittelbar. Eine Boundary-Element-Method-Berechnung 49 berücksichtigt lediglich Konturelemente 43 die unmittelbar auf der fußseitigen Teilkontur 24 liegen, also an deren Oberfläche.

Der dritte Schritt 130 wird unter Verändern der Korrekturvorgabe 35 wiederholt durchgeführt, bis die Zielparameter 48 erfüllt sind. Ein Erfüllen oder Verfehlen eines Zielparameters 48 ist in einem fünften Schritt 150 ermittelbar. Bei einem wiederholten Durchlaufen des dritten Schritts 130 werden die Funktionsparameter 39 der Korrekturfunktion 30 variiert, also die Koeffizienten 42 des Polynoms 40, verändert. Dieses Verändern oder Variieren erfolgt systematisch mittels einer Benutzervorgabe, eines Algorithmus, einer Wertetabelle, einer Hilfsfunktion und/oder einer Künstlichen Intelligenz. Der dritte und vierte Schritt 130, 140 durchlaufen so eine Rückführschleife, die als sechster Schritt 160 aufzufassen ist, bis die fußseitige Teilkontur 24 bzw. fußseitige Endkontur 24 als Resultat 200 des Verfahrens 100 feststeht. Die so ermittelte fußseitige Teilkontur 24 und die kopfseitige Teilkontur 22 gehören zu geometrischen Daten 46 eines Zahns 12 einer Verzahnung 10. Die geometrischen Daten 46 sind einsetzbar, um ein nicht näher abgebildetes Werkzeug 50 herzustellen, das zu einer spanabhebenden Fertigung der Verzahnung 10 ausgebildet ist.

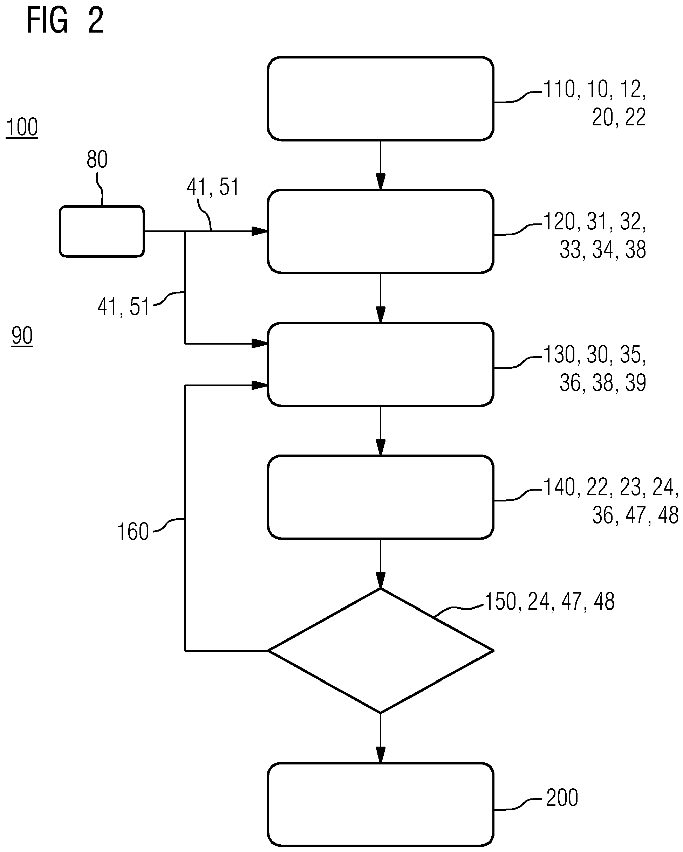

In FIG 2 ist ein Ablaufdiagramm einer zweiten Ausführungsform des beanspruchten Verfahrens 100 dargestellt. Das Verfahren 100 geht von einem ersten Schritt 110 aus, in dem eine fußseitige Startkontur 20 für einen Zahn 12 einer herzustellenden Verzahnung 10 ausgewählt wird. Im ersten Schritt 110 wird auch eine kopfseitige Teilkontur 22 des Zahns 12 ausgewählt. Die fußseitige Startkontur 20 ist durch das Verfahren 100 zu einer fußseitigen Teilkontur 24 weiterzubilden. In einem darauffolgenden zweiten Schritt 120 wird ein Anpassungsbereich 38 für die fußseitige Startkontur 20 ausgewählt und festgelegt. Das Auswählen im zweiten Schritt 120 erfolgt mittels einer Benutzervorgabe 41 und/oder eines Algorithmus 51 über ein Computerprogrammprodukt 80, in dem das Verfahren 100 durchgeführt wird. Das Computerprogrammprodukt 80 wird dabei in einem Entwicklerwerkzeug 90 ausgeführt. Der Anpassungsbereich 38 definiert, in welchem Abschnitt die fußseitige Startkontur 20 zur fußseitigen Teilkontur 24 weiterzubilden ist. Der Anpassungsbereich 38 ist durch einen Startpunkt 32 und einen Endpunkt 34 begrenzt, zwischen die eine Korrekturfunktion 30 zu legen ist. Durch das Auswählen des Anpassungsbereichs 38 werden die Lage des Startpunkts 32 und des Endpunkts 34 definiert. Ebenfalls werden durch den Anpassungsbereich 38 eine Erstreckungsachse 31 und eine Werteachse 33 definiert, auf denen ein dritter Schritt 130 basiert.

Im darauffolgenden dritten Schritt 130 erfolgt ein Ermitteln einer Korrekturvorgabe 35 mittels einer Korrekturfunktion 30. Die Korrekturfunktion 35 weist einen Graphen 37 zwischen dem im zweiten Schritt 120 definierten Startpunkt 32 und dem Endpunkt 34 auf. Die Korrekturfunktion 35 erzeugt eine Mehrzahl an Funktionswerten 36 im Anpassungsbereich 38. Die Funktionswerte 36 werden in einem vierten Schritt 140 mit korrespondierenden Punkten 23 auf der fußseitigen Startkontur 20 überlagert. Dazu werden die Punkte 23 auf der fußseitigen Startkontur 20 als Funktionswerte entlang der Erstreckungsachse 31 und der Werteachse 33 der Korrekturfunktion 30 aufgefasst und die Funktionswerte 36 der Korrekturfunktion 30 hinzuaddiert. Es wird dadurch eine fußseitige Teilkontur 24 erzeugt, die an die kopfseitige Teilkontur 22 angrenzt, also in diese übergeht. Im vierten Schritt 140 wird geprüft, ob durch das Weiterbilden der fußseitigen Startkontur 20 zur fußseitigen Teilkontur 24 ein Zielparameter 48 erreicht ist. Der Zielparameter 48 ist dabei eine gesteigerte Zahnfußtragfähigkeit 47.

Es folgt ein fünfter Schritt 150, der als Ablaufverzweigung ausgebildet ist. Wenn die erzielte Zahnfußtragfähigkeit 47 bei der ermittelten fußseitigen Teilkontur 24 nicht erreicht ist, erfolgt ein sechster Schritt 160, der als Rückführschleife ausgebildet ist. Dadurch werden der dritte und vierte Schritt 130, 140 erneut durchlaufen. Beim erneuten Durchlaufen des ersten Schritts 130 wird zumindest ein Funktionsparameter 39 der Korrekturfunktion 30 variiert. Das Variieren erfolgt dabei mittels einer Benutzervorgabe 41 oder eines Algorithmus 51, der in einem Computerprogrammprodukt 80 ausgeführt wird. Wenn im fünften Schritt 150 erkannt wird, dass die erzielte Zahnfußtragfähigkeit 47 dem Zielparameter 48 genügt, diesen also erreicht oder überschreitet, folgt eine Resultatausgabe 200. Darin wird die ermittelte fußseitige Teilkontur 24 als Resultat 200 des Verfahrens 100 ausgegeben.

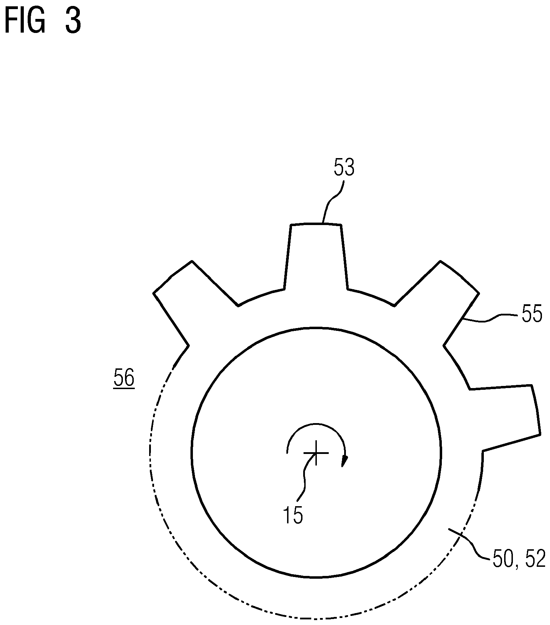

FIG 3 zeigt schematisch ein Werkzeug 50, das als Schneidrad ausgebildet ist. Das Schneidrad 52 ist um eine Drehachse 15 drehbar ausgebildet und verfügt radial außen über eine Schneide 55, die zu einem spanabhebenden Bearbeiten eines metallischen Werkstoffs ausgebildet ist. Die Schneide 55 ist, bezogen auf eine in der Zeichenebene liegende Werkzeugebene 56, in ihrer Form zumindest auf einer Seite korrespondierend zu einer fußseitigen Teilkontur 24 ausgebildet. Durch die Schneide 55 wird entsprechend eine Bearbeitungskontur 53 definiert. Das Werkzeug 50 ist dazu geeignet, mit der Bearbeitungskontur 53, also der Schneide 55, aus einem Verzahnungsrohteil 58 eine korrespondierende Verzahnung 10 herzustellen, die einen entsprechenden Zahn 12 umfasst.

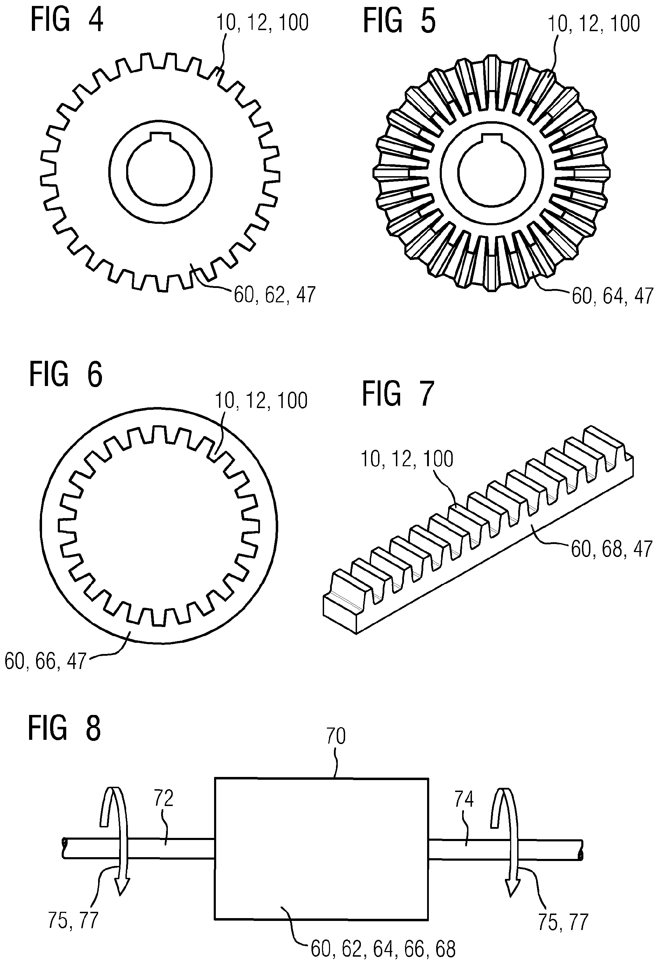

In FIG 4 bis FIG 7 sind unterschiedliche Maschinenkomponenten 60 dargestellt, die jeweils mit einer Verzahnung 10 ausgestattet sind, die einen Zahn 12 aufweist, dessen Form gemäß mittels eines beanspruchten Verfahrens 100 festgelegt ist. Eine der entsprechenden Maschinenkomponenten 60 ist ein außenverzahntes Zahnrad 62, wie in FIG 4 gezeigt, eine weitere entsprechende Maschinenkomponente 60 ein Kegelrad 64 gemäß FIG 5. Ferner zeigt FIG 6 ein innenverzahntes Hohlrad 66 und FIG 7 eine Zahnstange 68. Durch die verbesserten Verzahnungen 10 in diesen Maschinenkomponenten 60 nach FIG 4 bis FIG 7 wird eine verbesserte Zahnfußtragfähigkeit 47 erzielt. Ferner ist in FIG 8 ein Getriebe 70 abgebildet, das über eine Eingangswelle 72 verfügt, über die dem Getriebe 70 ein Drehmoment 75 bei einer bestimmten Drehzahl 77 zugeführt wird. Das Getriebe 70 weist auch eine Ausgangswelle 74 auf, über die auch ein Drehmoment 75 bei einer bestimmten Drehzahl 77 abgeführt wird. Durch das Getriebe 70 werden das Drehmoment 75 und die Drehzahl 77 von der Eingangswelle 72 zur Ausgangswelle 74 verändert. Das Getriebe 70 weist zumindest ein außenverzahntes Zahnrad 62, ein Kegelrad 64, ein innenverzahntes Hohlrad 66 und/oder eine Zahnstange 68 auf, die nach einem beanspruchten Verfahren 100 hergestellt sind.

## Patentansprüche

1. Verfahren (100) zum Herstellen einer Verzahnung (10), umfassend die Schritte:
a) Auswählen einer fußseitigen Startkontur (20) und einer kopfseitigen Teilkontur (22) eines Zahns (12);
b) Auswählen eines Anpassungsbereichs (38) für zumindest einen Teil der fußseitigen Startkontur (20);
c) Ermitteln einer Korrekturvorgabe (35) für den Anpassungsbereich (38);
d) Verändern der fußseitigen Startkontur (20) anhand der Korrekturvorgabe (35) zu einer fußseitigen Endkontur (24),
wobei die Korrekturvorgabe (35) anhand einer Korrekturfunktion (30) ermittelt wird, die zumindest einen einstellbaren Funktionsparameter (39) umfasst, und eine spanabhebende Fertigung basierend auf der kopfseitigen Teilkontur (22) und der fußseitigen Endkontur (24) durchgeführt wird, **dadurch gekennzeichnet, dass** die fußseitige Startkontur (20) als Ellipsenabschnitt (21) ausgebildet ist, und die Korrekturfunktion (30) als Polynom (40) mit einstellbaren Koeffizienten (42) ausgebildet ist und als Polynom (40) zumindest dritter Ordnung ausgebildet ist.

2. Verfahren (100) nach Anspruch 1, **dadurch gekennzeichnet, dass** die kopfseitige Teilkontur (22) als Evolvente (26) ausgebildet ist.

3. Verfahren (100) nach Anspruch 1 oder 2, **dadurch gekennzeichnet, dass** die Korrekturfunktion (30) einen Zahnlückenmittelpunkt (28) als Startpunkt (32) oder als Endpunkt (34) aufweist.

4. Verfahren (100) nach einem der Ansprüche 1 bis 3, **dadurch gekennzeichnet, dass** die Korrekturfunktion (30) einen Übergangspunkt (29) zwischen der fußseitigen Startkontur (20) und der kopfseitigen Teilkontur (22) aufweist.

5. Verfahren (100) nach einem der Ansprüche 1 bis 4, **dadurch gekennzeichnet, dass** zumindest der Schritt c) unter Verändern zumindest eines einstellbaren Funktionsparameters (39) wiederholt durchgeführt wird.

6. Verfahren (100) nach einem der Ansprüche 1 bis 5, **dadurch gekennzeichnet, dass** der Schritt c) durchgeführt wird bis ein vorgebbarer Zielparameter (48) erreicht ist.

7. Verfahren (100) nach einem der Ansprüche 1 bis 6, **dadurch gekennzeichnet, dass** zumindest der Schritt c) anhand einer Boundary-Element-Method-Berechnung (49) durchgeführt wird.

8. Verfahren (100) nach einem der Ansprüche 1 bis 7, **dadurch gekennzeichnet, dass** die fußseitige Startkontur (20) als zumindest abschnittsweise Approximation (45) einer Basis-Verzahnung (44) ausgebildet ist, die eine Verzahnung (10) einer bereits existenten Maschinenkomponente ist (60).

9. Verfahren (100) nach einem der Ansprüche 1 bis 8, **dadurch gekennzeichnet, dass** die Korrekturfunktion (30) mittels eines Algorithmus (51), einer Funktion, einer Tabelle, oder einer Benutzereingabe (41) einstellbar ist.

10. Computerprogrammprodukt (80), das in ausführbarer Form in einem Entwicklerwerkzeug (90) speicherbar ausgebildet ist und dazu ausgebildet ist, Geometriedaten (46) einer fußseitigen Teilkontur (34) auszugeben, **dadurch gekennzeichnet, dass** das Computerprogrammprodukt (80) zu einem Durchführen eines Verfahrens (100) nach zumindest einem der Ansprüche 1 bis 9 ausgebildet ist.

11. Werkzeug (50) zur Bearbeitung eines Verzahnungsrohteils (58), umfassend eine Schneide (55), die zu einem Spanabheben an einem metallischen Werkstoff ausgebildet ist, **dadurch gekennzeichnet, dass** das Werkzeug (50) zu einem Herstellen einer fußseitigen Endkontur (24) ausgebildet ist, die nach einem der Ansprüche 1 bis 9 ausgebildet ist, und die Schneide eine Form aufweist, die zumindest mit einem Teil der fußseitigen Teilkontur bzw. fußseitigen Endkontur korrespondiert, die durch ein Verfahren gemäß einem der Ansprüche 1 bis 9 hergestellt ist.

12. Maschinenkomponente (60), umfassend zumindest eine nach einem Verfahren der Ansprüche 1 bis 9 hergestellten Verzahnung (10) mit einer Mehrzahl an Zähnen (12), wobei zumindest einer der Zähne (12) eine fußseitige Teilkontur (24) aufweist, die in eine kopfseitige Teilkontur (22) übergeht, wobei die fußseitige Teilkontur (24) in zumindest einem Abschnitt (38) einer Überlagerung eines Ellipsenabschnitts (21) mit einer Polynomkurve (40) entspricht, wobei zwischen der fußseitigen Teilkontur (24) und der kopfseitigen Teilkontur (22) ein unstetiger Übergang ausgebildet ist.

13. Maschinenkomponente (60) nach Anspruch 12, **dadurch gekennzeichnet, dass** die kopfseitige Teilkontur (22) als Evolvente (26) ausgebildet ist.

## Claims

1. Method (100) for producing a toothing (10), comprising the steps of:
a) selecting a root-side starting contour (20) and a tip-side partial contour (22) of a tooth (12);
b) selecting an adaptation region (38) for at least a part of the root-side starting contour (20);
c) determining a correction specification (35) for the adaptation region (38);
d) modifying the root-side starting contour (20) using the correction specification (35) to form a root-side final contour (24),
wherein the correction specification (35) is determined using a correction function (30) which comprises at least one adjustable function parameter (39), and chip-removing manufacture is carried out based on the tip-side partial contour (22) and the root-side final contour (24), **characterized in that** the root-side starting contour (20) is configured as an ellipse segment (21), and the correction function (30) is configured as a polynomial (40) with adjustable coefficients (42) and configured as a polynomial (40) of order of at least three.

2. Method (100) according to Claim 1, **characterized in that** the tip-side partial contour (22) is configured as an involute (26).

3. Method (100) according to Claim 1 or 2, **characterized in that** the correction function (30) has a tooth-space midpoint (28) as a start point (32) or as an end point (34).

4. Method (100) according to one of Claims 1 to 3, **characterized in that** the correction function (30) has a transition point (29) between the root-side starting contour (20) and the tip-side partial contour (22).

5. Method (100) according to one of Claims 1 to 4, **characterized in that** at least step c) is carried out repeatedly while at least one adjustable function parameter (39) is modified.

6. Method (100) according to one of Claims 1 to 5, **characterized in that** step c) is carried out until a predefinable target parameter (48) is reached.

7. Method (100) according to one of Claims 1 to 6, **characterized in that** at least step c) is carried out using a boundary-element-method calculation (49).

8. Method (100) according to one of Claims 1 to 7, **characterized in that** the root-side starting contour (20) is configured as an at least sectional approximation (45) of a basic toothing (44) that is a toothing (10) of an already existing machine component (60).

9. Method (100) according to one of Claims 1 to 8, **characterized in that** the correction function (30) is able to be adjusted by means of an algorithm (51), a function, a table, or a user input (41).

10. Computer-program product (80) which is configured to be storable in executable form in a developer tool (90) and is configured to output geometrical data (46) of a root-side partial contour (34), **characterized in that** the computer-program product (80) is configured for implementation of a method (100) according to at least one of Claims 1 to 9.

11. Tool (50) for machining a toothing blank (58), comprising a cutter (55) which is configured for chip-removal at a metallic material, **characterized in that** the tool (50) is configured for production of a root-side final contour (24) that is configured according to one of Claims 1 to 9, and the cutter has a shape which corresponds at least to a part of the root-side partial contour or root-side final contour that is produced by way of a method according to one of Claims 1 to 9.

12. Machine component (60) comprising at least one toothing (10) produced according to a method of Claims 1 to 9, which has a plurality of teeth (12), wherein at least one of the teeth (12) has a root-side partial contour (24) which transitions into a tip-side partial contour (22), wherein, in at least one section (38), the root-side partial contour (24) corresponds to a superposition of an ellipse segment (21) with a polynomial curve (40), wherein a discontinuous transition is formed between the root-side partial contour (24) and the tip-side partial contour (22).

13. Machine component (60) according to Claim 12, **characterized in that** the tip-side partial contour (22) is configured as an involute (26).

## Revendications

1. Procédé (100) permettant de fabriquer une denture (10), comprenant les étapes consistant à :
a) sélectionner un contour initial côté pied (20) et un contour partiel côté tête (22) d'une dent (12) ;
b) sélectionner une zone d'adaptation (38) pour au moins une partie du contour initial côté pied (20) ;
c) établir une spécification de correction (35) pour la zone d'adaptation (38) ;
d) modifier le contour initial côté pied (20) à l'aide de la spécification de correction (35) en un contour final côté pied (24),
dans lequel la spécification de correction (35) est établie à l'aide d'une fonction de correction (30) qui comprend au moins un paramètre de fonction réglable (39), et une fabrication par enlèvement de copeaux est effectuée sur la base du contour partiel côté tête (22) et du contour final côté pied (24),
**caractérisé en ce que** le contour initial côté pied (20) est réalisé sous la forme d'un segment d'ellipse (21), et la fonction de correction (30) est réalisée sous la forme d'un polynôme (40) à coefficients réglables (42) et sous la forme d'un polynôme (40) au moins du troisième ordre.

2. Procédé (100) selon la revendication 1, **caractérisé en ce que** le contour partiel côté tête (22) est réalisé sous la forme d'une développante (26).

3. Procédé (100) selon la revendication 1 ou 2, **caractérisé en ce que** la fonction de correction (30) présente un centre d'entredent (28) comme point initial (32) ou comme point final (34).

4. Procédé (100) selon l'une quelconque des revendications 1 à 3, **caractérisé en ce que** la fonction de correction (30) présente un point de transition (29) entre le contour initial côté pied (20) et le contour partiel côté tête (22).

5. Procédé (100) selon l'une quelconque des revendications 1 à 4, **caractérisé en ce qu'**au moins l'étape c) est exécutée à plusieurs reprises en modifiant au moins un paramètre de fonction réglable (39) .

6. Procédé (100) selon l'une quelconque des revendications 1 à 5, **caractérisé en ce que** l'étape c) est exécuté jusqu'à ce qu'un paramètre cible prédéfinissable (48) soit atteint.

7. Procédé (100) selon l'une quelconque des revendications 1 à 6, **caractérisé en ce qu'**au moins l'étape c) est exécutée à l'aide d'un calcul selon la méthode des éléments finis de frontière (49).

8. Procédé (100) selon l'une quelconque des revendications 1 à 7, **caractérisé en ce que** le contour initial côté pied (20) est réalisé sous la forme d'une approximation au moins locale (45) d'une denture de base (44) qui est une denture (10) d'un composant de machine (60) déjà existant.

9. Procédé (100) selon l'une quelconque des revendications 1 à 8, **caractérisé en ce que** la fonction de correction (30) est réglable au moyen d'un algorithme (51), d'une fonction, d'un tableau ou d'une entrée utilisateur (41).

10. Produit de programme informatique (80) qui est réalisé de manière à pouvoir être stocké sous forme exécutable sur un outil de développement (90) et qui est réalisé pour sortir des données géométriques (46) d'un contour partiel côté pied (34), **caractérisé en ce que** le produit de programme informatique (80) est réalisé pour exécuter un procédé (100) selon au moins l'une des revendications 1 à 9.

11. Outil (50) permettant d'usiner une ébauche de denture (58), comprenant une lame (55) qui est réalisée pour un enlèvement de copeaux sur un matériau métallique, **caractérisé en ce que** l'outil (50) est réalisé pour fabriquer un contour final côté pied (24) qui est réalisé selon l'une quelconque des revendications 1 à 9, et la lame présente une forme qui correspond au moins à une partie du contour partiel côté pied ou du contour final côté pied qui est fabriquée selon un procédé selon l'une quelconque des revendications 1 à 9.

12. Composant de machine (60), comprenant au moins une denture (10) fabriquée selon un procédé selon les revendications 1 à 9, comprenant une pluralité de dents (12), dans lequel au moins l'une des dents (12) présente un contour partiel côté pied (24) qui passe à un contour partiel côté tête (22), dans lequel le contour partiel côté pied (24) dans au moins un segment (38) correspond à une superposition d'un segment d'ellipse (21) avec une courbe polynomiale (40), dans lequel une transition discrète est réalisée entre le contour partiel côté pied (24) et le contour partiel côté tête (22).

13. Composant de machine (60) selon la revendication 12, **caractérisé en ce que** le contour partiel côté tête (22) est réalisé sous la forme d'une développante (26).
